# FASCICULE DE BREVET EUROPEEN

(11) **EP 4 247 552 B1**
(45) Date de publication et mention de la délivrance du brevet: **08.01.2025**
(21) Numéro de dépôt: 21801952.9
(22) Date de dépôt: 08.11.2021
(51) Int. Cl.: B01J 29/40, B01J 29/46, B01J 37/00, B01J 37/06, B01J 37/10, B01J 35/40

(54) **PROCEDE DE PREPARATION D'UN CATALYSEUR A BASE DE ZEOLITHE DE CODE STRUCTURAL MFI PRESENTANT UNE DENSITE ET UNE TENUE MECANIQUE AMELIOREES**
VERFAHREN ZUR HERSTELLUNG EINES KATALYSATORS AUF ZEOLITHBASIS MIT MFI-STRUKTURCODE MIT VERBESSERTER DICHTE UND MECHANISCHER FESTIGKEIT
METHOD FOR PREPARING A ZEOLITE-BASED CATALYST HAVING AN MFI STRUCTURAL CODE WITH IMPROVED DENSITY AND MECHANICAL STRENGTH

(30) Priorité: 23.11.2020 FR 2011995
(43) Date de publication de la demande: 27.09.2023
(73) Titulaire: IFP Energies nouvelles, 92500 Rueil-Malmaison (FR)
(72) Inventeur: DIGNE, Mathieu, 92852 RUEIL-MALMAISON CEDEX (FR); FECANT, Antoine, 92852 RUEIL-MALMAISON CEDEX (FR); REGAL, Thomas, 92852 RUEIL-MALMAISON CEDEX (FR); BERTRAND DRIRA, Chloé, 92852 RUEIL-MALMAISON CEDEX (FR)
(74) Mandataire: IFP Energies nouvelles
(86) Numéro de dépôt international: PCT/EP2021/080891
(87) Numéro de publication internationale: WO 2022/106230

(56) Documents cités:
- EP-A2- 0 034 444
- US-A- 4 788 377
- US-A- 5 063 187
- US-A- 5 348 924

## Description

### Domaine de l'invention

L'invention propose une méthode de préparation originale d'un catalyseur sous forme d'extrudé à base d'une zéolithe acide de code structural MFI (de préférence H-ZSM-5) introduite en forte teneur avec un liant contenant de l'alumine, et contenant optionnellement une phase active hydrogénante. Le type de catalyseur obtenu peut être utilisé dans de nombreuses applications de catalyse hétérogène nécessitant une fonction acide, notamment celles de transformation d'hydrocarbures :
les différents procédés de conversion du méthanol (en oléfines, en essence, ...), de conversion d'oléfines (en oléfines, en essence, en diesel, ...), de conversion de paraffines en aromatiques, les procédés d'alkylation, de déparaffinage de diesels, d'huiles, de pyrolisats de plastiques, de pyrolisats de biomasse...

### Art antérieur

Le brevet US 3,702,886 revendique le solide ZSM-5 ainsi que son mode de préparation.

Les brevets US 5,063,187 et US 7,229,941 dévoilent des catalyseurs à base notamment de zéolithe ZSM-5 présentant des structures de cristallites primaires de zéolithes ainsi que des tailles d'agglomérats de cristallites primaires de zéolithes particulières.

Il est connu du brevet US 4,206,085 de proposer un catalyseur sur la base d'une matrice zéolite/liant présentant une résistance améliorée à l'abrasion

Il est connu de la demande de brevet US 2019/0247837 de proposer une méthode de préparation d'un catalyseur d'hydrocraquage contenant une zéolithe ZSM-5, un liant, une phase hydrogénante.

Il est connu du brevet CN106608779 de proposer un catalyseur pour la production de propylène par craquage catalytique, le catalyseur comprenant une zéolithe ZSM-5, un liant ainsi qu'un élément de la famille des terres rares.

Il est connu du brevet US 4,788,377 une méthode de production d'oléfines à partir d'alcool en utilisant une zéolithe de type ZSM-5 traitée à la vapeur d'eau.

Pour assurer des performances catalytiques élevées, il est souvent nécessaire d'atteindre des teneurs en zéolithes importante. Le rôle du liant dans les catalyseurs zéolithes mis en forme est d'assurer la cohésion des objets et ainsi permettre une résistance mécanique suffisante à l'emploi en tant que catalyseur.

Ainsi les teneurs élevées en phases zéolitiques peuvent induire une fragilité des objets, ou une teneur élevée en liant pour assurer une bonne tenue mécanique peut limiter les performances catalytiques.

### Objets de l'invention

L'invention propose un procédé de préparation original d'un catalyseur sous forme d'extrudé comprenant une zéolithe acide de code structural MFI, de préférence H-ZSM-5, la teneur en zéolithe étant comprise entre 45% à 90% par rapport à la masse totale du catalyseur, et un liant, de préférence l'alumine, et contenant optionnellement une phase active hydrogénante, comprenant au moins les étapes suivantes :
a) Mélange de ladite zéolithe de code structural MFI et du liant, la taille moyenne des particules élémentaires de ladite zéolithe MFI mesurée en microscopie électronique à balayage étant comprise entre 110 et 800 nm, de préférence entre 120 et 700 nm, de manière très préférée entre 150 et 500 nm,
b) Ajout audit mélange obtenu à l'étape a) d'un agent peptisant choisi parmi l'acide nitrique et les acides carboxyliques choisis parmi l'acide acétique, l'acide citrique et l'acide butyrique seuls ou en mélange,
c) Ajout audit mélange obtenu à l'étape b) d'un agent de neutralisation choisi parmi les bases inorganiques choisies parmi la soude, la potasse, et l'ammoniaque, seules ou en mélange et les bases organiques en solution choisies parmi les amines et les composés ammonium quaternaire seul ou en mélange,
d) Mise en forme par extrusion du mélange obtenu à l'étape c) pour obtenir un solide,
e) Eventuellement, séchage du solide obtenu à l'étape d),
f) Traitement thermique dudit solide obtenu à l'étape d) ou e) en présence de vapeur d'eau à une température comprise entre 400 et 1000°C en présence d'un flux d'air contenant de 1 à 60% en volume d'eau,
g) Eventuellement, l'introduction d'un ou plusieurs précurseurs d'une phase active hydrogénante sur le solide obtenu à l'étape f).

Le schéma de préparation proposé permet, en combinant de manière originale, différentes étapes de préparation du support / catalyseur d'obtenir un catalyseur dont la porosité se démarque de l'art antérieur. En effet, malgré la forte teneur en zéolithe introduite, le procédé de préparation dudit catalyseur conduit à un volume poreux optimisé (avec minimisation de la macroporosité et contrôle de la répartition mésoporeuse) permettant d'ajuster finement la teneur volumique en zéolithe dans le réacteur (ie la densité en kg/m3). La teneur volumique en zéolithe dans le réacteur est définie par le produit de la DRT (densité de remplissage tassé) du catalyseur par la teneur massique en zéolithe dudit catalyseur. De plus, ledit procédé selon l'invention permet d'améliorer les propriétés mécaniques, grandeurs critiques pour les supports à forte teneur en zéolithes.

Le type de catalyseur obtenu selon l'invention peut être utilisé dans de nombreuses applications de catalyse hétérogène nécessitant une fonction acide, notamment celles de transformation d'hydrocarbures : les différents procédés de conversion du méthanol (en oléfines, en essence, ...), de conversion d'oléfines (en oléfines, en essence, en diesel, ...), de conversion de paraffines en aromatiques, les procédés d'alkylation, de déparaffinage de diesels, d'huiles, de pyrolisats de plastiques, de pyrolisats de biomasse...

### Terminologie et techniques de caractérisation

Le catalyseur et le support de la présente invention présentent une distribution poreuse spécifique, où les volumes macroporeux et mésoporeux sont mesurés par intrusion de mercure et le volume microporeux est mesuré par adsorption d'azote.

Par « macropores », on entend des pores dont l'ouverture est supérieure à 50 nm.

Par « mésopores », on entend des pores dont l'ouverture est comprise entre 2 nm et 50 nm, bornes incluses.

Par « micropores », on entend des pores dont l'ouverture est inférieure à 2 nm.

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society », 60, 309, (1938).

Le volume des macropores et des mésopores est mesuré par porosimétrie par intrusion de mercure selon la norme ASTM D4284-83 à une pression maximale de 4000 bar (400 MPa), utilisant une tension de surface de 484 dyne/cm et un angle de contact de 140°. L'angle de mouillage a été pris égal à 140° en suivant les recommandations de l'ouvrage "Techniques de l'ingénieur, traité analyse et caractérisation », P 1050-5, écrits par Jean Charpin et Bernard Rasneur.

On fixe à 0,2 MPa la valeur à partir de laquelle le mercure remplit tous les vides intergranulaires, et on considère qu'au-delà le mercure pénètre dans les pores de l'échantillon.

Le volume macroporeux du catalyseur ou du support est défini comme étant le volume cumulé de mercure introduit à une pression comprise entre 0,2 MPa et 30 MPa, correspondant au volume contenu dans les pores de diamètre apparent supérieur à 50 nm.

Le volume mésoporeux du catalyseur ou du support est défini comme étant le volume cumulé de mercure introduit à une pression comprise entre 30 MPa et 400 MPa, correspondant au volume contenu dans les pores de diamètre apparent compris entre 3,6 nm et 50 nm.

Le volume des micropores est mesuré par porosimétrie à l'azote. L'analyse quantitative de la microporosité est effectuée à partir de la méthode "t" (méthode de Lippens-De Boer, 1965) qui correspond à une transformée de l'isotherme d'adsorption de départ comme décrit dans l'ouvrage « Adsorption by powders and porous solids. Principles, methodology and applications » écrit par F. Rouquérol, J. Rouquérol et K. Sing, Academic Press, 1999.

Dans l'exposé qui suit de l'invention, on entend par volume poreux total de l'alumine ou du support ou du catalyseur, la somme des volumes mésoporeux, macroporeux (mesurés par intrusion au porosimètre à mercure) et microporeux (mesurée par porosimétrie à l'azote).

La résistance mécanique du matériau selon l'invention déterminée par le test d'écrasement grain à grain (EGG). Il s'agit d'un test normalisé (norme ASTM D4179-01) qui consiste à soumettre un matériau sous forme d'objet millimétrique, comme une bille, une pastille ou un extrudé, à une force de compression générant la rupture. L'analyse est répétée sur un certain nombre de solides pris individuellement et typiquement sur un nombre de solides compris entre 10 et 200. La moyenne des forces latérales de rupture mesurées constitue l'EGG moyen qui est exprimé dans le cas des granules en unité de force (N), et dans le cas des extrudés en unité de force par unité de longueur (daN/mm ou décaNewton par millimètre de longueur d'extrudé).

La perte au feu (ou PAF) d'un solide est la perte de masse relative (exprimée en %) d'un solide lorsque celui-ci a été porté à 1000°C pendant 3 h dans un four à moufle.

On définit la densité de remplissage tassé (DRT) par la masse volumique apparents après tassement d'un échantillon. Elle est mesurée de la façon suivante : on introduit un poids donné de support ou de masse dans une éprouvette graduée pour contenir les agglomérés dans un volume donné. On fait ensuite vibrer l'éprouvette jusqu'à la fin de tout tassement et jusqu'à l'obtention d'un volume constant. On calcule ensuite le poids d'aggloméré qui occupe un volume unité. La densité de remplissage à l'état tassé (DRT) est déterminée selon la norme NF EN ISO 787-11.

### Description MEB pour mesure taille de particules

La taille des particules de zéolithe est mesurée par microscopie électronique à balayage à un niveau de grossissement de 10 000 à 100 000 sur un instrument Zeiss Supra 40. Un diamètre équivalent est calculé par toute méthode connue de l'homme du métier sur un nombre d'objet supérieur à 200. Lesdits objets étant clairement délimités les uns des autres, les agglomérats n'étant pas considérés. La taille moyenne des particules élémentaires de zéolithe est ainsi calculée en faisant la moyenne arithmétique des diamètres équivalents mesurés par objet. La taille moyenne des particules élémentaires est une taille moyenne en nombre.

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

Dans le sens de la présente invention, les différents modes de réalisation présentés peuvent être utilisés seuls ou en combinaison les uns avec les autres, sans limitation de combinaison lorsque c'est techniquement réalisable.

Dans le sens de la présente invention, les différentes plages de paramètres pour une étape donnée tels que les plages de pression et les plages de température peuvent être utilisées seul ou en combinaison. Par exemple, dans le sens de la présente invention, une plage de valeur préférée de pression peut être combinée avec une plage de valeur de température plus préférée.

### Description détaillée de l'invention

L'invention propose un procédé de préparation original d'un catalyseur sous forme d'extrudé comprenant une zéolithe acide de code structural MFI, de préférence H-ZSM-5, la teneur en zéolithe étant comprise entre 45% à 90% par rapport à la masse totale du catalyseur, et un liant, de préférence l'alumine, et contenant optionnellement une phase active hydrogénante.

### Préparation du catalyseur

Conformément à l'invention, ledit catalyseur comprend au moins une zéolithe de code structural MFI et un liant.

Selon l'étape a), la zéolithe de code structural MFI est mélangé au liant. Selon un mode de préparation préféré ladite zéolithe de code structural MFI et le liant peuvent être mélangés, sans que cela soit limitatif, sous forme de poudre, poudre broyée, suspension, suspension ayant subi un traitement de désagglomération. Ladite zéolithe et le liant peuvent avantageusement être mélangés par mélange mécanique ou par mise en suspension à une concentration ajustée à la teneur finale en zéolithe et en liant visée dans le catalyseur préparé selon la présente invention.

### La zéolithe de code structural MFI

Les zéolithes de type structural MFI sont des solides microporeux cristallisés et ont été décrites dans la littérature (G.T. Kokotailo, S.L. Lawton, D.H. Oison, W.M. Meier, Nature, vol. 272, p. 437-438, 1978 ; D.H. Olson, G.T Kokotailo, S.L. Lawton, W.M. Meier, J. Phys. Chem., vol. 85, p. 2238-2243, 1981 ; H. van Koningsveld, J. C. Jansen, H. van Bekkum, Zeolites, vol. 10, p. 235-242, 1990). La structure cristalline de ces matériaux est décrite dans les documents « Collection of simulated XRD powder patterns for zeolites », Ed. M.M.J. Treacy and J.B. Higgins, Fifth Revised Edition, 2007, p. 280-281 et "Atlas of zeolite framework types", C. Baerlocher, L.B. McCusker, D.H. Olson, Sixth Revised Edition, 2007, p. 212-213.

Les procédés de préparation des zéolithes de code structural MFI sont également décrits dans lesdits documents.

Ladite zéolithe de code structural MFI présente une composition chimique exprimée sur une base anhydre, en termes de moles d'oxydes, définie par la formule générale suivante : (96-a) XO₂ : a/2 Y₂O₃ : a/2 M_{2/n}O, dans laquelle X représente au moins un élément tétravalent, Y représente au moins un élément trivalent, M est au moins un métal alcalin et/ou un métal alcalino-terreux de valence n, et x < 27.

X est préférentiellement choisi parmi le silicium, le germanium, le titane et le mélange d'au moins deux de ces éléments tétravalents, très préférentiellement X est le silicium et Y est préférentiellement choisi parmi l'aluminium, le bore, le fer, l'indium et le gallium, très préférentiellement Y est l'aluminium. M est préférentiellement choisi parmi le lithium, le sodium, le potassium, le calcium, le magnésium et le mélange d'au moins deux de ces métaux et très préférentiellement M est le sodium. De manière préférée, X représente le silicium, ladite zéolithe de code structural MFI selon l'invention est alors un solide entièrement silicique lorsque l'élément Y est absent de la composition de ladite zéolithe de code structural MFI. Il est également avantageux d'employer comme élément X un mélange de plusieurs éléments, en particulier un mélange de silicium avec un autre élément X choisi parmi le germanium et le titane, de préférence le germanium. Ainsi, lorsque le silicium est présent en mélange avec un autre élément X, ladite zéolithe de code structural MFI selon l'invention est alors un métallosilicate cristallisé présentant un diagramme de diffraction des rayons X identique à celui décrit dans « Collection of simulated XRD powder patterns for zeolites », Ed. M.M.J. Treacy and J.B. Higgins, Fifth Revised Edition, 2007, p. 280-281 lorsqu'il se trouve sous sa forme calcinée. De manière encore plus préférée et en présence d'un élément Y, X étant le silicium et Y étant l'aluminium : ladite zéolithe de code structural MFI selon l'invention est alors un aluminosilicate. De préférence, ladite zéolithe de code structural MFI selon l'invention est sous forme aluminosilicate.

De préférence, la taille moyenne de particules élémentaires de zéolithe de code structural MFI mesurée en microscopie électronique à balayage est comprise entre 110 et 800 nm, de préférence entre 120 et 700 nm, de manière très préférée entre 150 et 500 nm.

De manière préférée, la zéolithe de code structural MFI est la ZSM-5.

De préférence, le rapport molaire du nombre d'atomes de silicium sur le nombre d'atomes d'aluminium Si/AI est inferieur a 100, de préférence inferieur a 70, de manière très préférée inferieur a 50.

La zéolithe de code structural MFI entrant dans la composition du catalyseur selon l'invention est avantageusement échangée par au moins un traitement par une solution d'au moins un sel d'ammonium de manière à obtenir la forme ammonium de la zéolithe de code structural MFI qui une fois calcinée conduit à la forme acide (H⁺) de ladite zéolithe de code structural MFI. Cette étape d'échange peut être effectuée à toute étape de la préparation du catalyseur, c'est-à-dire après l'étape de préparation de la zéolithe de code structural MFI, après l'étape de mise en forme de la zéolithe de code structural MFI par un liant minéral poreux, ou encore après l'étape éventuelle d'introduction de la phase hydro-déshydrogenante.

Ladite zéolithe de code structural MFI entrant dans la composition du catalyseur utilisé dans le procédé selon l'invention est avantageusement au moins en partie, de préférence pratiquement totalement, sous forme acide, c'est-à-dire sous forme H⁺.

Conformément à l'invention, la teneur en zéolithe étant comprise entre 45% à 90% par rapport à la masse totale du catalyseur et de préférence entre, de préférence entre 50% à 80% en poids, et de manière très préférée entre 55% et 75% en poids.

### Le liant

Selon l'invention, le catalyseur utilisé contient également un liant. Ledit liant peut avantageusement être amorphe ou cristallisé. De préférence, ledit liant est avantageusement choisi dans le groupe formé par les oxydes suivants ou leurs formes hydratées : l'alumine, la silice, la silice-alumine, les argiles, l'oxyde de titane, l'oxyde de bore et la zircone, pris seuls ou en mélange. De préférence, ledit liant est l'alumine ou une hydroxyde d'aluminium, seul ou en mélange. De manière préférée, ledit liant est de l'alumine sous toutes ses formes connues de l'homme du métier, telles que par exemple les alumines de type alpha, gamma, éta, delta ou les hydroxydes, telles que boehmite, bayerite ou gibbsite. Lesdites alumines diffèrent par leur surface spécifique et leur volume poreux. La perte au feu du liant est avantageusement supérieure à 15%.

De préférence, ledit catalyseur comprend de 10% à 60% poids de liant, et de manière préférée de 20% à 50% en poids par rapport à la masse totale dudit catalyseur.

Selon l'étape b), un agent peptisant choisi parmi l'acide nitrique et les acides carboxyliques choisis parmi l'acide acétique, l'acide citrique et l'acide butyrique seuls ou en mélange, est ajouté audit mélange issu de l'étape a). De manière préféré, l'agent peptisant est l'acide nitrique.

La quantité d'agent peptisant peut-être définie avantageusement par un taux d'acide total, exprimé en pourcentage par rapport à la masse de liant séché introduit à l'étape a) et compris entre 0,1 et 12%poids. De préférence, le taux d'acide total, est compris entre 0,1 et 6% poids, de manière très préférée entre 0,1 et 4% poids.

De l'eau peut également être introduite au cours de l'étape b), de manière à ce que la perte au feu du mélange soit comprise entre 20 et 80% et de manière préférée entre 30 et 70%.

Selon l'étape c), un agent de neutralisation choisi parmi les bases inorganiques choisies parmi la soude, la potasse, et l'ammoniaque, seules ou en mélange et les bases organiques en solution choisies parmi les amines et les composés ammonium quaternaire seul ou en mélange est ajouté audit mélange issu de l'étape b). De manière préférée les bases organiques en solution sont choisies parmi les alkyl-éthanol amines et les alkyl- amines éthoxylées. Les bases organiques sont de préférence utilisées en solution dans l'eau. De manière très préférée, l'agent de neutralisation est une base inorganique et de préférence l'ammoniaque et de manière préférée l'ammoniaque en solution aqueuse (NH₄OH).

La quantité d'agent de neutralisation peut être définie par un taux de neutralisation exprimé en pourcentage molaire de base par rapport à la quantité d'acide introduit dans l'étape b) et est compris entre 1 et 200%. De préférence, le taux de neutralisation exprimé en pourcentage molaire de base par rapport à la quantité d'acide est compris entre 10 et 100%.

Selon l'étape d), le mélange obtenu à l'étape c) est mis en forme par extrusion, pour obtenir un solide. Afin de faciliter cette étape, différents additifs peuvent être ajoutés. A titre d'exemples d'additifs, on peut citer notamment la cellulose, la carboxy-methyl-cellulose, la carboxy-ethyl-cellulose, du tall-oil, les gommes xanthaniques, des agents tensio-actifs, des agents floculants comme les polyacrylamides, le noir de carbone, les amidons, l'acide stéarique, l'alcool polyacrylique, l'alcool polyvinylique, des biopolymères, le glucose, les polyethylènes glycols, etc.

L'extrusion peut avantageusement être réalisée par n'importe quel outil conventionnel, disponible commercialement. Le mélange issu de l'étape c) est avantageusement extrudé à travers une filière, par exemple à l'aide d'un piston ou d'une mono-vis ou double vis d'extrusion. Cette étape d'extrusion peut avantageusement être réalisée par toute méthode connue de l'homme de métier pour obtenir un solide ou matériau cru.

Le procédé selon l'invention peut également éventuellement comprendre une étape e) de séchage du solide obtenu à l'étape d) de mise en forme. Ladite étape de séchage est avantageusement effectuée par toute technique connue de l'homme du métier.

De préférence, le séchage est effectué sous flux d'air, ledit flux d'air pouvant être sec ou humide. Ledit séchage peut également être avantageusement effectué sous flux de tout gaz oxydant, réducteur ou inerte. De préférence, le séchage est avantageusement effectué entre 50°C et 180°C, de manière préférée entre 60°C et 150°C et de manière très préférée entre 80°C et 130°C. De préférence, ladite étape de séchage opère pendant une durée comprise entre 2h et 10h.

Selon l'étape f), une étape de traitement thermique en présence de vapeur d'eau du solide obtenu à l'issu de l'étape d) ou e) est mise en oeuvre à une température comprise entre 400 et 1000°C pendant une durée avantageusement comprise entre 1 et 24 h, en présence d'un flux d'air contenant de 1 à 60% en volume d'eau.

De préférence, ladite étape f) est mise en oeuvre en présence d'un flux d'air contenant une teneur en eau comprise entre 1 et 50% volume, et de manière très préférée entre 1 et 10% en volume. De préférence, ladite étape f) de traitement thermique opère à une température comprise entre 450°C et 850°C. De préférence, ladite étape f) de traitement thermique opère pendant une durée comprise entre 2h et 10h.

Le procédé selon l'invention peut également éventuellement comprendre une étape g) d'introduction d'un ou plusieurs précurseurs d'une phase active hydrogénante sur le solide obtenu à l'étape f).

De préférence, le ou les précurseurs de la phase active hydrogénante comprend au moins un élément du groupe VIII et éventuellement au moins un élément du groupe VIB. De préférence, l'élément du groupe VIII est choisi parmi le Nickel et le Cobalt, de manière très préférée l'élément du groupe VIII est le nickel. Lorsque la phase hydrogénante comprend un élément du groupe VIB, il s'agit de préférence du Molybdène ou du tungstène, de manière très préférée du Molybdène.

Les précurseurs de la phase hydrogénante peuvent avantageusmeent être introduits par toute méthode connue de l'homme du métier, telle que l'imprégnation à sec, l'imprégnation en excès, l'échange ionique, ...

De manière préférée, les précurseurs de la phase hydrogénante sont introduits par impégnation à sec. Les précurseurs de la phase hydrogénante peuvent avantageusement être introduits par une ou plusieurs opérations d'imprégnation du solide obtenu à l'étape f), par une solution contenant au moins un précurseur d'au moins un métal choisi dans le groupe formé par les éléments du groupes VIII et éventuellement au moins un précurseur d'au moins un métal choisi dans le groupe formé par les éléments du groupe VIB. Lorsque plusieurs précurseurs sont utilisés, ils sont de préférence introduits en même temps. Dans la variante préférée où l'élément du groupe VIII est le nickel ou le cobalt, et les éléments du groupe VIB sont le molybdène ou le tungstène, les précurseurs utilisables dans le procédé de préparation du catalyseur sont par exemple le nitrate de nickel, le dihydroxyde de nickel, l'acétate de nickel, le carbonate de nickel, le nitrate de cobalt, le dihydroxyde de cobalt, l'acétate de cobalt, le carbonate de cobalt, l'heptamolybdate d'ammonium, l'acide molybdique, l'oxyde de molybdène, le métatungstate d'ammonium, l'acide tungstique ou l'oxyde de tungstène. Tout autre composé connu de l'homme du métier présentant une solubilité suffisante peut également être utilisé.

L'imprégnation des précurseurs des éléments choisis parmi les éléments du groupe VIII et éventuellement les éléments du groupe VIB peut avantageusement être facilitée par ajout d'acide phosphorique dans les solutions aqueuses.

Dans le cas où l'étape g) est mise en oeuvre, la teneur en élément du groupe VIII est avantageusement comprise entre 0,1% et 10% en poids d'oxyde par rapport à la masse totale dudit catalyseur, de manière préférée entre 0,5% et 8% en poids d'oxyde et de manière très préférée entre 1% et 6% en poids d'oxyde.

Dans la variante où la phase active hydrogénante comprend un élément du groupe VIB, la teneur en métal du groupe VIB est avantageusement comprise entre 1 et 40% en poids d'oxyde par rapport à la masse totale dudit catalyseur, de manière préférée entre 2 et 35% en poids d'oxyde et de manière très préférée entre 5 et 30% en poids d'oxyde.

Le catalyseur peut également avantageusement contenir du phosphore, la teneur en phosphore est avantageusement comprise entre 0,5 et 15% en poids d'oxyde P2O5 par rapport à la masse totale dudit catalyseur, de manière préférée comprise entre 1 et 10% en poids d'oxyde.

Après imprégnation des éléments constitutifs de la phase hydrogénante, le solide ainsi rempli par la solution d'imprégnation peut éventuellement subir une étape h) de maturation à température ambiante, pendant une durée comprise entre 0,5h et 24h, de préférence entre 1h et 6h.

Après imprégnation, et une éventuelle étape de maturation, le solide obtenu subi une étape i) de séchage pendant une durée comprise entre 0,5h et 24h, de préférence entre 1h et 12h. De préférence, le séchage est effectué sous flux d'air, ledit flux d'air pouvant être sec ou humide. De préférence, le séchage est avantageusement effectué entre 50°C et 180°C, de manière préférée entre 60°C et 150°C.

Ledit solide séché, éventuellement maturé, subit ensuite éventuellement une étape de j) calcination pendant une durée comprise entre 0,5h et 24h, de préférence entre 1h et 12h. Ladite étape de calcination est avantageusement réalisée en présence d'oxygène moléculaire, par exemple en effectuant un balayage d'air, l'air pouvant être sec ou humide, à une température avantageusement comprise entre 200°C et 600°C, de manière préférée entre 300°C et 500°C.

La phase active hydrogénante du catalyseur utilisé dans le procédé selon l'invention est de préférence utilisée sous forme sulfurée. La sulfuration du catalyseur peut être effectuée in-situ ou ex-situ par toute méthode connue de l'homme du métier. Dans le cas d'une étape de sulfuration in-situ, le catalyseur est sulfuré par passage d'une charge contenant au moins un composé soufré, qui une fois décomposé conduit à la fixation de soufre sur la phase active. Cette charge peut être gazeuse ou liquide, par exemple de l'hydrogène contenant de l'H₂S, ou un liquide contenant au moins un composé soufré. Dans le cas d'une sulfuration ex-situ, un composé soufré peut être introduit sur le catalyseur en présence éventuellement d'un autre composé. Le catalyseur est ensuite séché, puis transféré dans le réacteur servant à mettre en oeuvre le procédé selon l'invention. Dans ce réacteur, le catalyseur est alors traité sous hydrogène afin de transformer au moins une partie du métal principal en sulfure. Une procédure qui convient particulièrement à l'invention est celle décrite dans les brevets FR-B-2 708 596 et FR-B- 2 708 597.

### Caractéristiques du catalyseur obtenu

Le procédé de préparation selon la présente invention présente notamment l'avantage de conduire à un catalyseur zéolithique poreux ayant une résistance mécanique tout à fait satisfaisante par rapport aux volumes poreux qui le caractérisent, ladite résistance étant matérialisée par la valeur de l'écrasement grain à grain EGG, de préférence d'au moins 0,8 daN/mm, de manière très préférée d'au moins 0,9 daN/mm.

Le procédé de préparation selon la présente invention permet l'obtention d'un catalyseur à forte teneur en zéolithe présentant avantageusement un volume poreux total, tel que mesuré par intrusion au porosimètre mercure compris entre 0,25 et 0,8 ml/g et de manière préférée entre 0,35 et 0,7 ml/g.

Le volume mésoporeux du catalyseur préparé selon l'invention, c'est-à-dire contenu dans les pores de diamètre compris entre 2 et 50 nm, bornes incluses, tel que mesuré par intrusion au porosimètre mercure est compris entre 0,1 et 0,6 ml/g et de manière préférée entre 0,2 et 0,5 ml/g.

Le volume macroporeux du catalyseur préparé selon l'invention, c'est-à-dire contenu dans les pores de diamètre supérieur à 50 nm, tel que mesuré par intrusion au porosimètre mercure est compris entre 0 et 0,4 ml/g et de manière préférée entre 0 et 0,2 ml/g.

Le catalyseur selon l'invention présente généralement une surface spécifique supérieure à 250 m²/g, de préférence supérieure à 300 m²/g et de manière préférée supérieure à 320 m²/g.

Selon l'invention, la teneur en zéolithe de code structural MFI du catalyseur selon l'invention est comprise entre 45% à 90% en poids par rapport à la masse totale dudit catalyseur, et de préférence entre 55% à 80% en poids.

La teneur volumique en zéolithe du catalyseur selon l'invention est avantageusement supérieure à 350 kg/m³, de manière préférée supérieure à 400 kg/m³.

La DRT du catalyseur selon l'invention est avantageusement comprise entre 0,5 et 1,0 g/ml et de manière préférée entre 0,6 et 0,9 g/ml.

Le type de catalyseur obtenu selon l'invention peut être utilisé dans de nombreuses applications de catalyse hétérogène nécessitant une fonction acide, notamment celles de transformation d'hydrocarbures : les différents procédés de conversion du méthanol (en oléfines, en essence, ...), de conversion d'oléfines (en oléfines, en essence, en diesel, ...), de conversion de paraffines en aromatiques, les procédés d'alkylation, de déparaffinage de diesels, d'huiles, de pyrolisats de plastiques et de pyrolisats de biomasse.

L'invention est illustrée par les exemples suivants qui ne présentent, en aucun cas, un caractère limitatif.

### Exemples

### Exemple 1 : préparation du catalyseur A (non-conforme à l'invention)

Afin de préparer le catalyseur A, une zéolithe ZSM-5 de code structural MFI présentant des tailles moyennes de particules élémentaires de l'ordre de 1 à 3,5 µm et de rapport atomique Si/AI de 22 et sous forme NH₄ (Zeolyst ^{®}) est mise en forme avec un liant de boehmite (Sasol ^{®}). Les poudres de boehmite et de zéolithe sont mélangées à sec avec des pourcentages massiques respectifs 30/70. Elles sont ensuite introduites dans une cuve fermée d'un malaxeur à double bras en Z (Guittard^{®}) de type MX. Un agent peptisant, l'acide nitrique, (HNO₃) est ajouté pour atteindre un taux d'acide de 4%. De l'eau est également introduite progressivement pour atteindre une PAF autour de 50%, la valeur étant ajustée en fonction de la formulation pour obtenir une pâte homogène et cohésive. Après 30 min de malaxage, un agent de neutralisation, l'ammoniaque, (NH₄OH) est ajouté à la pâte. La quantité d'agent de neutralisation utilisée est ajustée pour atteindre un taux de neutralisation de 40%. La pâte est malaxée est encore 15 min puis extrudée à l'aide d'une extrudeuse piston au travers d'une filière de diamètre 3 mm. Les extrudés ainsi obtenus sont séchés (1 nuit à 120°C en étuve ventilée sous air) puis calcinés à 540°C durant 4 heures sous air humide, avec une teneur en eau équivalente à 6% volume.

Les caractéristiques du catalyseur obtenu sont données dans le tableau 1.

### Exemple 2 : préparation du catalyseur B (non-conforme à l'invention)

Afin de préparer le catalyseur B, une zéolithe ZSM-5 de code structural MFI présentant des tailles moyennes de particules élémentaires de l'ordre de 150 à 500 nm et de rapport atomique Si/AI de 25 et sous forme NH₄ (Zeolyst ^{®}) est mise en forme avec un liant de boehmite (Sasol ^{®}). Les poudres de boehmite et de zéolithe sont mélangées à sec avec des pourcentages massiques respectifs 30/70. Elles sont ensuite introduites dans une cuve fermée d'un malaxeur à double bras en Z (Guittard^{®}) de type MX. Un agent peptisant (acide nitrique, HNO₃) est ajouté pour atteindre un taux d'acide de 4%. De l'eau est également introduite progressivement pour atteindre une PAF autour de 50%, la valeur étant ajustée en fonction de la formulation pour obtenir une pâte homogène et cohésive. Aucun agent de neutralisation n'est ajouté à la pâte. La pâte est extrudée à l'aide d'une extrudeuse piston au travers d'une filière de diamètre 3 mm. Les extrudés ainsi obtenus sont séchés (1 nuit à 120°C en étuve ventilée sous air) puis calcinés à 540°C durant 4 heures sous air humide, avec une teneur en eau équivalente à 6% volume.

Les caractéristiques du catalyseur obtenu sont données dans le tableau 1.

### Exemple 3 : préparation du catalyseur C (non-conforme à l'invention)

Afin de préparer le catalyseur C, une zéolithe ZSM-5 de code structural MFI présentant des tailles moyennes de particules élémentaires de l'ordre de 150 à 500 nm et de rapport atomique Si/AI de 25 et sous forme NH₄ (Zeolyst ^{®}) est mise en forme avec un liant de boehmite (Sasol ^{®}). Les poudres de boehmite et de zéolithe sont mélangées à sec avec des pourcentages massiques respectifs 30/70. Elles sont ensuite introduites dans une cuve fermée d'un malaxeur à double bras en Z (Guittard^{®}) de type MX. Un agent peptisant (acide nitrique, HNO₃) est ajouté pour atteindre un taux d'acide de 4%. De l'eau est également introduite progressivement pour atteindre une PAF autour de 50%, la valeur étant ajustée en fonction de la formulation pour obtenir une pâte homogène et cohésive. Après 30 min de malaxage, un agent de neutralisation (ammoniaque, NH₄OH) est ajouté à la pâte. La quantité d'agent de neutralisation utilisée est ajustée pour atteindre un taux de neutralisation de 40%. La pâte est malaxée est encore 15 min puis extrudée à l'aide d'une extrudeuse piston au travers d'une filière de diamètre 3 mm. Les extrudés ainsi obtenus sont séchés (1 nuit à 120°C en étuve ventilée sous air) puis calcinés à 540°C durant 4 heures sous air sec.

Les caractéristiques du catalyseur obtenu sont données dans le tableau 1.

### Exemple 4 : préparation du catalyseur D (non-conforme à l'invention)

Afin de préparer le catalyseur D, une zéolithe ZSM-5 de code structural MFI présentant des tailles moyennes de particules élémentaires de l'ordre de 1 à 2 µm et de rapport atomique Si/AI de 22 et sous forme NH₄ (Zeolyst ^{®}) est mise en forme avec un liant de boehmite (Sasol ^{®}). Les poudres de boehmite et de zéolithe sont mélangées à sec avec des pourcentages massiques respectifs 40/60. Elles sont ensuite introduites dans une cuve fermée d'un malaxeur à double bras en Z (Guittard^{®}) de type MX. Un agent peptisant (acide nitrique, HNO₃) est ajouté pour atteindre un taux d'acide de 4%. De l'eau est également introduite progressivement pour atteindre une PAF autour de 50%, la valeur étant ajustée en fonction de la formulation pour obtenir une pâte homogène et cohésive. Après 30 min de malaxage, un agent de neutralisation (ammoniaque, NH₄OH) est ajouté à la pâte. La quantité d'agent de neutralisation utilisée est ajustée pour atteindre un taux de neutralisation de 40%. La pâte est malaxée est encore 15 min puis extrudée à l'aide d'une extrudeuse piston au travers d'une filière de diamètre 3 mm. Les extrudés ainsi obtenus sont séchés (1 nuit à 120°C en étuve ventilée sous air) puis calcinés à 540°C durant 4 heures sous air humide, avec une teneur en eau équivalente à 6% volume.

Les caractéristiques du catalyseur obtenu sont données dans le tableau 1.

### Exemple 5 : préparation du catalyseur E (non-conforme à l'invention)

Afin de préparer le catalyseur E, une zéolithe ZSM-5 de code structural MFI présentant des tailles moyennes de particules élémentaires de l'ordre de 150 à 500 nm et de rapport atomique Si/AI de 25 et sous forme NH₄ (Zeolyst ^{®}) est mise en forme avec un liant de boehmite (Sasol ^{®}). Les poudres de boehmite et de zéolithe sont mélangées à sec avec des pourcentages massiques respectifs 50/50. Elles sont ensuite introduites dans une cuve fermée d'un malaxeur à double bras en Z (Guittard^{®}) de type MX. Un agent peptisant (acide nitrique, HNO₃) est ajouté pour atteindre un taux d'acide de 4%. De l'eau est également introduite progressivement pour atteindre une PAF autour de 50%, la valeur étant ajustée en fonction de la formulation pour obtenir une pâte homogène et cohésive. Après 30 min de malaxage, un agent de neutralisation (ammoniaque, NH₄OH) est ajouté à la pâte. La quantité d'agent de neutralisation utilisée est ajustée pour atteindre un taux de neutralisation de 40%. La pâte est malaxée est encore 15 min puis extrudée à l'aide d'une extrudeuse piston au travers d'une filière de diamètre 3 mm. Les extrudés ainsi obtenus sont séchés (1 nuit à 120°C en étuve ventilée sous air) puis calcinés à 540°C durant 4 heures sous air sec.

Les caractéristiques du catalyseur obtenu sont données dans le tableau 1.

### Exemple 6 : préparation du catalyseur F (conforme à l'invention)

Afin de préparer le catalyseur F, une zéolithe ZSM-5 de code structural MFI présentant des tailles moyennes de particules élémentaires de l'ordre de 150 à 500 nm et de rapport atomique Si/AI de 25 et sous forme NH₄ (Zeolyst ^{®}) est mise en forme avec un liant de boehmite (Sasol ^{®}). Les poudres de boehmite et de zéolithe sont mélangées à sec avec un ratio massique 30/70. Elles sont ensuite introduites dans une cuve fermée d'un malaxeur à double bras en Z (Guittard^{®}) de type MX. Un agent peptisant (acide nitrique, HNO₃) est ajouté pour atteindre un taux d'acide de 4%. De l'eau est également introduite progressivement pour atteindre une PAF autour de 50%, la valeur étant ajustée en fonction de la formulation pour obtenir une pâte homogène et cohésive. Après 30 min de malaxage, un agent de neutralisation (ammoniaque, NH₄OH) est ajouté à la pâte. La quantité d'agent de neutralisation utilisée est ajustée pour atteindre un taux de neutralisation de 100%. La pâte est malaxée est encore 15 min puis extrudée à l'aide d'une extrudeuse piston au travers d'une filière de diamètre 3 mm. Les extrudés ainsi obtenus sont séchés (1 nuit à 120°C en étuve ventilée sous air) puis calcinés à 540°C durant 4 heures sous air humide, avec une teneur en eau équivalente à 6% volume.

Les caractéristiques du catalyseur obtenu sont données dans le tableau 1.

### Exemple 7 : préparation du catalyseur G (conforme à l'invention)

Afin de préparer le catalyseur G, une zéolithe ZSM-5 de code structural MFI présentant des tailles moyennes de particules élémentaires de l'ordre de 150 à 500 nm et de rapport atomique Si/AI de 25 et sous forme NH₄ (Zeolyst ^{®}) est mise en forme avec un liant de boehmite (Sasol ^{®}). Les poudres de boehmite et de zéolithe sont mélangées à sec avec un ratio massique 40/60. Elles sont ensuite introduites dans une cuve fermée d'un malaxeur à double bras en Z (Guittard^{®}) de type MX. Un agent peptisant (acide nitrique, HNO₃) est ajouté pour atteindre un taux d'acide de 4%. De l'eau est également introduite progressivement pour atteindre une PAF autour de 50%, la valeur étant ajustée en fonction de la formulation pour obtenir une pâte homogène et cohésive. Après 30 min de malaxage, un agent de neutralisation (ammoniaque, NH₄OH) est ajouté à la pâte. La quantité d'agent de neutralisation utilisée est ajustée pour atteindre un taux de neutralisation de 40%. La pâte est malaxée est encore 15 min puis extrudée à l'aide d'une extrudeuse piston au travers d'une filière de diamètre 3 mm. Les extrudés ainsi obtenus sont séchés (1 nuit à 120°C en étuve ventilée sous air) puis calcinés à 540°C durant 4 heures sous air humide, avec une teneur en eau équivalente à 6% volume.

Les caractéristiques du catalyseur obtenu sont données dans le tableau 1.

### Exemple 8 : préparation du catalyseur H (conforme à l'invention)

Le solide H obtenu sous forme d'extrudés selon l'exemple 7 est imprégné à sec avec une solution d'imprégnation préparée par dissolution de nitrate de nickel (Ni(NO₃)₂,6H₂O, Sigma ^{®}, >98%) dans de l'eau déminéralisée. Après imprégnation à sec, les extrudés sont laissés à maturer en atmosphère saturées en eau pendant 2 heures, puis ils sont séchés pendant 12 heures à 120°C et enfin calcinés sous flux d'air sec à 450°C pendant 2 heures. La quantité de nitrate de nickel dans la solution d'imprégnation est ajustée pour obtenir une teneur en nickel en équivalent oxyde de 3% poids NiO.

Les caractéristiques du catalyseur obtenu sont données dans le tableau 1.

### Exemple 9 : propriétés des catalyseurs A à H

Le tableau 1 ci-dessous récapitule les caractéristiques des catalyseurs synthétisés A à H.

**Tableau 1 : Caractéristiques des catalyseurs synthétisés**

| | A | B | C | D | E | F | G | H |
|---|---|---|---|---|---|---|---|---|
| | Comparatif | | | | | Selon l'invention | | |
| Volume poreux total (ml/g) | 0,72 | 0,58 | 0,58 | 0,67 | 0,57 | 0,48 | 0,44 | 0,43 |
| Volume mésoporeux (ml/g) | 0,30 | 0,31 | 0,31 | 0,30 | 0,50 | 0,27 | 0,36 | 0,35 |
| Volume macroporeux (ml/g) | 0,34 | 0,19 | 0,19 | 0,30 | 0,01 | 0,13 | 0,01 | 0,01 |
| Volume microporeux (ml/g) | 0,08 | 0,08 | 0,08 | 0,07 | 0,06 | 0,08 | 0,07 | 0,07 |
| S_{BET} (m²/g) | 378 | 388 | 386 | 369 | 361 | 373 | 371 | 365 |
| D.R.T. (g/cc) | 0,556 | 0,651 | 0,634 | 0,585 | 0,630 | 0,701 | 0,763 | 0,786 |
| %pds zéolithe dans le catalyseur final | 70 | 70 | 70 | 60 | 50 | 70 | 60 | 58,2 |
| %pds phase active équivalent oxyde dans le catalyseur final | S.O. | S.O. | S.O. | S.O. | S.O. | S.O. | S.O. | 3,1 |
| Teneur volumique zéolithe (kg/m³) | 389 | 456 | 444 | 351 | 315 | 491 | 458 | 457 |
| EGG (daN/mm) | 0,79 | 0,84 | 0,72 | 0,92 | 1,02 | 1,01 | 1,06 | 1,10 |

Les caractéristiques mesurées des différents catalyseurs et présentées au tableau 1 montrent que les solides préparés selon l'invention permettent une amélioration par rapport aux méthodes connues de l'art antérieur. En effet, l'association d'étapes de neutralisation (solides F, G, H vs B) et de traitement à la vapeur d'eau (solides F, G, H vs. C et E), conjuguées à l'utilisation de particules élémentaires de zéolithes de type MFI de faible taille (solides F, G, H vs. A et D) permet un taux de chargement de zéolithe supérieur par unité de volume tout en préservant de bonnes tenues mécaniques.

## Revendications

1. Procédé de préparation d'un catalyseur sous forme d'extrudé comprenant une zéolithe acide de code structural MFI, de préférence H-ZSM-5, la teneur en zéolithe étant comprise entre 45% à 90% par rapport à la masse totale du catalyseur, et un liant, de préférence l'alumine, et contenant optionnellement une phase active hydrogénante, comprenant au moins les étapes suivantes :
a) Mélange de ladite zéolithe de code structural MFI et du liant, la taille moyenne des particules élémentaires de ladite zéolithe MFI mesurée en microscopie électronique à balayage étant comprise entre 110 et 800 nm, de préférence entre 120 et 700 nm, de manière très préférée entre 150 et 500 nm,
b) Ajout audit mélange obtenu à l'étape a) d'un agent peptisant choisi parmi l'acide nitrique et les acides carboxyliques choisis parmi l'acide acétique, l'acide citrique et l'acide butyrique seuls ou en mélange,
c) Ajout audit mélange obtenu à l'étape b) d'un agent de neutralisation choisi parmi les bases inorganiques choisies parmi la soude, la potasse, et l'ammoniaque, seules ou en mélange et les bases organiques en solution choisies parmi les amines et les composés ammonium quaternaire seul ou en mélange,
d) Mise en forme par extrusion du mélange obtenu à l'étape c) pour obtenir un solide,
e) Eventuellement, séchage du solide obtenu à l'étape d),
f) Traitement thermique dudit solide obtenu à l'étape d) ou e) en présence de vapeur d'eau à une température comprise entre 400 et 1000°C en présence d'un flux d'air contenant de 1 à 60% en volume d'eau,
g) Eventuellement, l'introduction d'un ou plusieurs précurseurs d'une phase active hydrogénante sur le solide obtenu à l'étape f).

2. Procédé selon la revendication 1 dans lequel la taille moyenne de particules élémentaires de zéolithe de code structural MFI mesurée en microscopie électronique à balayage est comprise de préférence entre 120 et 700 nm, de manière très préférée entre 150 et 500 nm.

3. Procédé selon l'une des revendications 1 ou 2 dans lequel la zéolithe de code structural MFI est la ZSM-5.

4. Procédé selon l'une des revendications 1 à 3 dans lequel la teneur en zéolithe est comprise entre 55% à 80% en poids par rapport à la masse totale du catalyseur.

5. Procédé selon l'une des revendications 1 à 4 dans lequel ledit liant est de l'alumine.

6. Procédé selon l'une des revendications 1 à 5 dans lequel l'agent peptisant utilisé dans l'étape b) est l'acide nitrique.

7. Procédé selon l'une des revendications 1 à 6 dans lequel la quantité d'agent peptisant utilisé dans l'étape b) est définie par un taux d'acide total, exprimé en pourcentage par rapport à la masse de liant séché introduit à l'étape a) et est compris entre 0,1 et 12%poids, de préférence, entre 0,1 et 6% poids, de manière très préférée entre 0,1 et 4% poids.

8. Procédé selon l'une des revendications 1 à 7 dans lequel l'agent de neutralisation utilisé dans l'étape c) est une base inorganique et de préférence l'ammoniaque et de manière préférée l'ammoniaque en solution aqueuse (NH4OH).

9. Procédé selon l'une des revendications 1 à 8 dans lequel la quantité d'agent de neutralisation utilisé dans l'étape c) est définie par un taux de neutralisation exprimé en pourcentage molaire de base par rapport à la quantité d'acide introduit dans l'étape b) et est compris entre 1 et 200% et de préférence entre 10 et 100 %.

10. Procédé selon l'une des revendications 1 à 9 dans lequel ladite étape f) est mise en oeuvre en présence d'un flux d'air contenant une teneur en eau comprise entre 1 et 50% volume, de manière très préférée entre 1 et 10% en volume, à une température comprise entre 450°C et 850°C et pendant une durée comprise entre 2h et 10h.

11. Procédé selon l'une des revendications 1 à 10 dans lequel, dans le cas où l'étape g) est mise en oeuvre, le ou les précurseurs de la phase active hydrogénante comprend au moins un élément du groupe VIII et éventuellement au moins un élément du groupe VIB.

12. Procédé selon la revendication 11 la teneur en élément du groupe VIII est comprise entre 0,1% et 10% en poids d'oxyde par rapport à la masse totale dudit catalyseur, de manière préférée entre 0,5% et 8% en poids d'oxyde et de manière très préférée entre 1% et 6% en poids d'oxyde.

## Patentansprüche

1. Verfahren zur Herstellung eines Katalysators in Form eines Extrudats, der einen sauren Zeolithen mit dem Strukturcode MFI, vorzugsweise H-ZSM-5, wobei der Zeolithgehalt zwischen 45 % und 90 % bezogen auf die Gesamtmasse des Katalysators beträgt, und ein Bindemittel, vorzugsweise Aluminiumoxid, umfasst und optional eine hydrierende aktive Phase enthält, umfassend mindestens die folgenden Schritte:
a) Mischen des Zeolithen mit dem Strukturcode MFI und des Bindemittels, wobei die mittlere Größe der elementaren Partikel des MFI-Zeolithen, gemessen durch Rasterelektronenmikroskopie, zwischen 110 und 800 nm, vorzugsweise zwischen 120 und 700 nm, besonders bevorzugt zwischen 150 und 500 nm beträgt,
b) Zugeben zu dem im Schritt im Schritt a) erhaltenen Gemisch eines Peptisiermittels, das ausgewählt ist aus Salpetersäure und den Carbonsäuren, die ausgewählt sind aus Essigsäure, Citronensäure und Buttersäure, allein oder gemischt,
c) Zugeben zu dem im Schritt b) erhaltenen Gemisch eines Neutralisationsmittels, das ausgewählt ist aus den anorganischen Laugen, die ausgewählt sind aus Soda, Pottasche und Ammoniak, allein oder gemischt, und den organischen Laugen in Lösung, die ausgewählt sind aus den Aminen und den Verbindungen von quaternärem Ammonium, allein oder gemischt,
d) Formen durch Extrudieren des im Schritt c) erhaltenen Gemisches, um einen Feststoff zu erhalten,
e) Gegebenenfalls Trocknen des im Schritt d) erhaltenen Feststoffs,
f) Thermisches Behandeln des im Schritt d) oder e) erhaltenen Feststoffs in Gegenwart von Wasserdampf bei einer Temperatur zwischen 400 und 1000 °C in Gegenwart eines Luftstroms, der 1 bis 60 Vol.-% Wasser enthält,
g) Gegebenenfalls Einführen eines oder mehrerer Vorläufer einer hydrierenden aktiven Phase auf den im Schritt f) erhaltenen Feststoff.

2. Verfahren nach Anspruch 1, wobei die mittlere Größe von elementaren Zeolithpartikeln mit dem Strukturcode MFI, gemessen durch Rasterelektronenmikroskopie, vorzugsweise zwischen 120 und 700 nm, besonders bevorzugt zwischen 150 und 500 nm beträgt.

3. Verfahren nach einem der Ansprüche 1 oder 2, wobei der Zeolith mit dem Strukturcode MFI ZSM-5 ist.

4. Verfahren nach einem der Ansprüche 1 bis 3, wobei der Zeolithgehalt zwischen 55 und 80 Gew.-% bezogen auf die Gesamtmasse des Katalysators beträgt.

5. Verfahren nach einem der Ansprüche 1 bis 4, wobei das Bindemittel Aluminiumoxid ist.

6. Verfahren nach einem der Ansprüche 1 bis 5, wobei das im Schritt b) verwendete Peptisiermittel Salpetersäure ist.

7. Verfahren nach einem der Ansprüche 1 bis 6, wobei die im Schritt b) verwendete Peptisiermittelmenge durch einen Gesamtsäuregrad definiert wird, der in Prozent bezogen auf die Masse des im Schritt a) zugegebenen getrockneten Bindemittels ausgedrückt wird und zwischen 0,1 und 12 Gew.-%, vorzugsweise zwischen 0,1 und 6 Gew.-% und besonders bevorzugt zwischen 0,1 und 4 Gew.-% beträgt.

8. Verfahren nach einem der Ansprüche 1 bis 7, wobei das im Schritt c) verwendete Neutralisationsmittel eine anorganische Lauge und vorzugsweise Ammoniak und bevorzugt Ammoniak in wässriger Lösung (NH4OH) ist.

9. Verfahren nach einem der Ansprüche 1 bis 8, wobei die im Schritt c) verwendete Neutralisationsmittelmenge durch einen Neutralisationsgrad definiert wird, der in Molprozent Lauge bezogen auf die im Schritt b) zugegebene Säuremenge ausgedrückt wird und zwischen 1 und 200 % und vorzugsweise zwischen 10 und 100 % beträgt.

10. Verfahren nach einem der Ansprüche 1 bis 9, wobei der Schritt f) in Gegenwart eines Luftstroms, der einen Wassergehalt zwischen 1 und 50 Vol.-%, besonders bevorzugt zwischen 1 und 10 Vol.-% enthält, bei einer Temperatur zwischen 450 °C und 850 °C und während einer Dauer zwischen 2 h und 10 h durchgeführt wird.

11. Verfahren nach einem der Ansprüche 1 bis 10, wobei, wenn der Schritt g) durchgeführt wird, der oder die Vorläufer der hydrierenden aktiven Phase mindestens ein Element der Gruppe VIII und gegebenenfalls mindestens ein Element der Gruppe VIB umfasst.

12. Verfahren nach Anspruch 11, wobei der Gehalt an dem Element der Gruppe VIII zwischen 0,1 und 10 Gew.-% Oxid bezogen auf die Gesamtmasse des Katalysators, bevorzugt zwischen 0,5 und 8 Gew.-% Oxid und besonders bevorzugt zwischen 1 und 6 Gew.-% Oxid beträgt.

## Claims

1. Process for preparing a catalyst in the form of an extrudate comprising an acidic MFI-type zeolite, preferably H-ZSM-5, the zeolite content being between 45% and 90% relative to the total mass of the catalyst, and a binder, preferably alumina, and optionally containing a hydrogenating active phase, comprising at least the following steps:
a) mixing said MFI-type zeolite and the binder, the average size of the elementary particles of said MFI zeolite measured by scanning electron microscopy being between 110 and 800 nm, preferably between 120 and 700 nm, very preferably between 150 and 500 nm,
b) adding, to said mixture obtained in step a), a peptizing agent selected from nitric acid and carboxylic acids selected from acetic acid, citric acid and butyric acid, alone or as a mixture,
c) adding, to said mixture obtained in step b), a neutralizing agent selected from inorganic bases selected from sodium hydroxide, potassium hydroxide, and ammonia, alone or as a mixture, and organic bases in solution selected from amines and quaternary ammonium compounds, alone or as a mixture,
d) shaping the mixture obtained in step c) by extrusion to obtain a solid,
e) optionally, drying the solid obtained in step d),
f) heat-treating said solid obtained in step d) or e) in the presence of steam at a temperature of between 400 and 1000°C in the presence of a stream of air containing from 1% to 60% by volume of water,
g) optionally, introducing one or more precursors of a hydrogenating active phase into the solid obtained in step f).

2. Process according to Claim 1, wherein the average size of the elementary particles of MFI-type zeolite measured by scanning electron microscopy is preferably between 120 and 700 nm, very preferably between 150 and 500 nm.

3. Process according to one of Claims 1 and 2, wherein the MFI-type zeolite is ZSM-5.

4. Process according to one of Claims 1 to 3, wherein the zeolite content is between 55% and 80% by weight relative to the total mass of the catalyst.

5. Process according to one of Claims 1 to 4, wherein said binder is alumina.

6. Process according to one of Claims 1 to 5, wherein the peptizing agent used in step b) is nitric acid.

7. Process according to one of Claims 1 to 6, wherein the amount of peptizing agent used in step b) is defined as a total acid content, expressed as a percentage relative to the mass of dried binder introduced in step a), and is between 0.1% and 12% by weight, preferably between 0.1% and 6% by weight, very preferably between 0.1% and 4% by weight.

8. Process according to one of Claims 1 to 7, wherein the neutralizing agent used in step c) is an inorganic base and preferably ammonia and preferably ammonia in aqueous solution (NH4OH).

9. Process according to one of Claims 1 to 8, wherein the amount of neutralizing agent used in step c) is defined as a degree of neutralization expressed as a molar percentage of base relative to the amount of acid introduced in step b) and is between 1 and 200%, preferably between 10 and 100%.

10. Process according to one of Claims 1 to 9, wherein step f) is executed in the presence of a stream of air having a water content of between 1% and 50% by volume, very preferably between 1% and 10% by volume, at a temperature of between 450°C and 850°C and for a period of between 2 h and 10 h.

11. Process according to one of Claims 1 to 10, wherein, in the case where step g) is included, the precursor(s) of the hydrogenating active phase comprise(s) at least one group VIII element and optionally at least one group VIB element.

12. Process according to Claim 11, the content of the group VIII element being between 0.1% and 10% by weight of oxide relative to the total mass of said catalyst, preferably between 0.5% and 8% by weight of oxide, and very preferably between 1% and 6% by weight of oxide.
